# EUROPEAN PATENT SPECIFICATION

(11) **EP 3 019 738 B1**
(45) Date of publication and mention of the grant of the patent: **04.10.2017**
(21) Application number: 14739659.2
(22) Date of filing: 25.06.2014
(51) Int. Cl.: F03B 13/18

(54) **ANCHORABLE WAVE ENERGY CONVERTOR**
VERANKERBARER WELLENENERGIEWANDLER
CONVERTISSEUR D'ÉNERGIE DES VAGUES POUVANT ÊTRE ANCRÉ

(30) Priority: 12.07.2013 BE 201300487
(43) Date of publication of application: 18.05.2016
(73) Proprietor: Laminaria BVBA, 8400 Oostende (BE)
(72) Inventor: NAUWELAERTS, Steven, B-8400 Oostende (BE)
(74) Representative: Philippaerts, Yannick
(86) International application number: PCT/BE2014/000033
(87) International publication number: WO 2015/003229

(56) References cited:
- WO-A1-02/059480
- WO-A2-2013/068748
- FR-A1- 2 895 466

## Description

The present invention pertains to an apparatus for converting energy from waves in a body of water, the apparatus comprising a main body adapted to float onto the water; two anchor lines adapted to be anchored to the bottom of the body of water; and conversion means to convert movement energy into another form of energy. Such an apparatus is also called an anchorable wave energy convertor.

An anchorable wave energy convertor of this kind is known from the international publication WO2011/135104 A2, in the name of the present applicant. This wave energy convertor has the drawback that the complete apparatus reciprocally moves with respect to the anchoring points at the bottom of the body of water, without this movement as such being converted in a usable form of energy. Furthermore, the known wave energy convertor requires a minimal water depth of about half a wavelength to function in an optimal manner. Further anchorable wave energy convertors are known that extract energy from a reciprocally moving main body with respect to the bottom (see for example WO2013/068748 A2). However these energy convertors do not comprise storm protection systems. Even if a storm protection system is present, wave energy cannot be optimally converted to usable energy when the storm protection is active.

It is an object of the present invention to provide a wave energy convertor that converts a reciprocal movement of a main body into a usable energy even when the storm protection system is active.

This object is reached by an apparatus as claimed in claim 1. The rotation means and conversion means are provided to convert a reciprocal movement of the main body into usable energy. Furthermore, coiling means are provided to adapt the length of the anchor lines and thereby to adapt the depth of the main body in the water. Thereby, storm protection is achieved, namely the deeper in the water, the lower the energy of the wave. By positioning the main body deeper in the water, the forces of the waves that act on the main body decrease, and in this manner, protection against storms is obtained. Furthermore, the wave energy convertor can maintain its operation with a nominal yield, since the energy of the waves that act on the main body can be amended. Even when the storm protection (coiling means) are active, the energy convertor can maintain converting wave energy into usable energy.

The invention is based inter alia on the insight of the inventors that, due to the double anchoring of the main body, each horizontal movement of the main body leads to a change in angle between the main body and the anchor line(s). This is not necessarily true for a single anchor. The dynamic change in angle can at the location of the connecting points of the anchor line(s) with the main body be converted into a movement of a rotation means, for example a rotation of a hinge element or a wheel, or a translation of a piston in a cylinder, which movement can be converted in another form of energy, for example electrical or hydraulical energy (compression of a fluid).

When two anchor lines are used (without a differential), wave movements from multiple directions can be converted into usable energy. However it may happen that the wave movement is in line with the first anchor line and transverse to the second anchor line (the anchor lines being considered in a top view). The first anchor line will therefore move with respect to the main body, so that energy from this movement can be converted into usable energy. The second anchor line will not move relative to the main body, but the main body will trigger a tilting of the second anchor line with respect to the bottom. This tilting will bring the main body closer to the bottom, and increases the tension to the second anchor line. By bringing the main body closer to the bottom, the tension on the first anchor line decreases, and as a result, a play is generated. This play will compromise the conversion into usable energy, and will also result in shocks when the tension to the first anchor line increases afterwards, which shocks will unnecessarily wear out the energy convertor. By mounting each of the two anchor lines each to a side gear of a differential, the force that is applied by the main body will be equally divided over the anchor lines. As a result, both of the anchor lines will be put under tension, and the influence of movement of the main body with respect to the anchor lines can be absorbed in a balanced manner by both anchor lines. This will lead to a stable and constant connection of the main body with the bottom.

It is an advantage of this embodiment that a substantially large freedom of movement of the apparatus is combined with a high energy conversion potential.

In an embodiment of the apparatus of the present invention, each of the first and second anchor lines is formed with two segments that are cooperatively coupled at the location of the rotation means to operate as one anchor line. Thereby it will be clear that when two segments are coiled at opposite sides of a single axis, rotation of the axis will on the one hand coil the one segment and uncoil the other segment. As a result the two segments operate as a single anchor line.

This embodiment has the advantage that a horizontal movement of the main body in a first direction can in a simple manner be converted to hinging elements (rollers), that can drive a generator.

In an embodiment of the apparatus of the present invention, the conversion means comprise at least one generator. Via the generator, horizontal movements of the main body with respect to the bottom can be converted into electrical energy. Electrical energy can be transported and further converted to other forms of energy in a substantially simple manner.

In an embodiment of the apparatus of the present invention, at the location of the two points and the two further points, pulleys are provided, wherein the anchor lines roll over the pulleys at the location of the two points and the two further points. When the anchor lines roll over pulleys at the location of the bottom, coiling means and rotation means can be easily separated from one another. Namely the anchor lines coming from the main body, run over the pulleys back to the main body. As a result, the anchor lines are connected at multiple locations, with multiple ends thereof, with the main body. This allows to connect the anchor lines in a simple manner with the coiling means at one side of the pulley, while at the other side of the pulley the anchor lines are connected with the rotation means. By operating the coiling means, the anchor lines roll over the pulley to that the anchor lines are made shorter (or longer) in a balanced manner at two sides of the pulley.

In an embodiment of the apparatus of the invention, each segment of the first and second anchor line extends from a respective side gear of the differential over a respective one of the two points and two further points at the bottom, and further over a respective location at the main body up to the rotation means. In this manner anchor lines can be connected to both the coiling means and the rotation means in an easy manner.

In embodiments of the apparatus of the invention, the main body is mainly formed as a straight prism with a cross-formed base.

Preferably the first and second anchor lines are formed as flat ropes. When flat ropes are rolled on a roll, the diameter of the roll changes by the rolling or unrolling of the rope on a roll. As a result, a same pulling force on the rope on the roll will result in a larger or smaller moment of torque exerted on the shaft of the roll. Particularly at the location of the rotation means, the use of flat ropes is advantageous. Namely when the energy convertor moves out of the center position, the first segment will unroll while the other segment rolls. Since the upward force exerted on the ropes is the same, but the diameter of the roll (due to rolling and unrolling of the segments) changes, a moment of force is generated by the rotation means, which brings the energy convertor back to its central position.

It is an advantage of this embodiment that the main body shows in all directions perpendicular to the vertical longitudinal axis a surface with which the pressure of incoming waves can be caught, which allows to catch energy from waves in all directions.

According to an aspect of the invention, use of the above described apparatus is provided, being anchored to the bottom of the body of water at least at four points, for generating electricity.

This use forms the main industrial application of the apparatuses of the present invention.

These and other aspects and advantages of the present invention will be further clarified by reference to the attached non-limiting figures, in which:
Figure 1 provides a schematic view of an apparatus according to a first embodiment of the invention;
Figure 2 provides a schematic view of an apparatus according to a second embodiment of the invention; and
Figure 3 provides a schematic view of a differential that is usable in the invention.

Throughout the figures, like numerals are used to refer to like elements. For efficiency, recurring elements will not be explicitly described for each embodiment.

The parts of the apparatus of the invention are in the figures not necessarily scale displayed.

In the present disclosure, rotation means are defined as elements that enable rotation of the main body with respect to the anchor points. Thereby in particular rolls and/or cylinders are meant, which enable the distance between main body and a first point to enlarge or shrink with respect to the distance between the main body and another point.

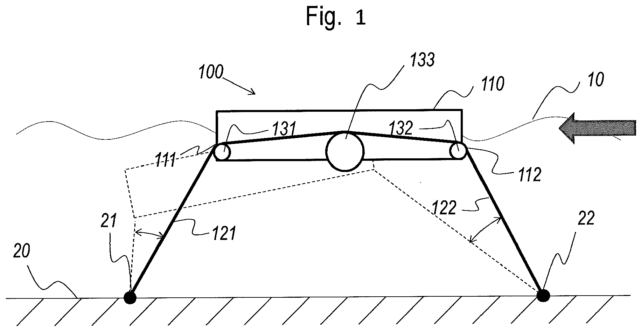

Figure 1 shows a body of water 10 with a bottom 20, wherein an anchorable wave energy converter 100 according to a first embodiment of the invention is mounted. The bottom 20 can be a natural bottom of the body of water, or a frame or anchor structure that is mounted to that bottom. The wave energy converter 100 comprises a floating body 110 which, depending on the intensity of the waves and the predetermined operation parameters, can be held closer or further away of the water surface by means of anchor lines 121, 122. The anchor lines 121 and 122 can be formed in one piece, or can be formed as two separate anchor line segments that are operationally connected to one another to form the first anchor line for connecting two distinct points at the bottom (two points at the bottom that lay at a horizontal distance with respect to each other) 21, 22 with the wave energy converter 100 at the locations 111 and 112 of the main body 110. Mathematically speaking, the anchor lines 121, 122 form together with the main body 110 a trapezium, of which the imaginary line defined by the point at the bottom 21, 22 forms the basis. In use, the anchor lines 121, 122 remain under tension by the upward force that acts on the body 110. By this geometrical construction, each horizontal movement of the main body 110 causes a rotation of the main body 110 with respect to the basis. Figure 1 shows in dotted lines an examples position of the anchor lines 121, 122 and the main body 110 under influence of a movement of the body of water in the direction of the arrow in bold.

It will be clear that such movement will always result in a rotation of the main body 110. By suitable rotation means 131, 132 mounted at the connecting locations 111, 112 of the anchor lines 121, 122, the rotation of the main body 110 could be transferred onto a roll or wheel 133, which at its turn can be used via a generator (not shown) for production of useable energy.

Although Figure 1 is a two-dimensional drawing, and the operation of the wave energy convertor 100 is described with respect to a flat wave with a propagation direction in the plane of the drawing, the skilled person will understand that the same principle can be applied in a direction that is perpendicular to the plane of the drawing, such that energy can be converted from waves that propagate in other directions. In such a case, a second anchor cable is to be provided which at its turn will be anchored at two points at the bottom 20. This cable will then typically roll over a further roll.

When the main body 110 reciprocally moves, the anchor cable will move through or along the main body in such a manner that part of the anchor cable that is taken at one side, will be given at the other side. By mounting the anchor cable 121 to 122 at the main body 110 via a roll 133 connected to a generator (not shown), a resistance is implemented against the movement of the main body 110, and in that manner energy can be caught.

The anchor cables must be adaptable in length for adapting to the tides and the amount of wave energy (storm security). The roll at the generator can contain coiling means that allow to adapt the length of the anchor cables. Preferably the coiling means are provided separately and are connected to the anchor lines to adapt the length of the anchor lines. Thereby, the coiling means are formed as a differential wherein the first anchor line is rolled at a first side gear, and the second anchor line at a second side gear of the differential, and whereby a crown gear of the differential is operated to adapt the vertical position of the main body.

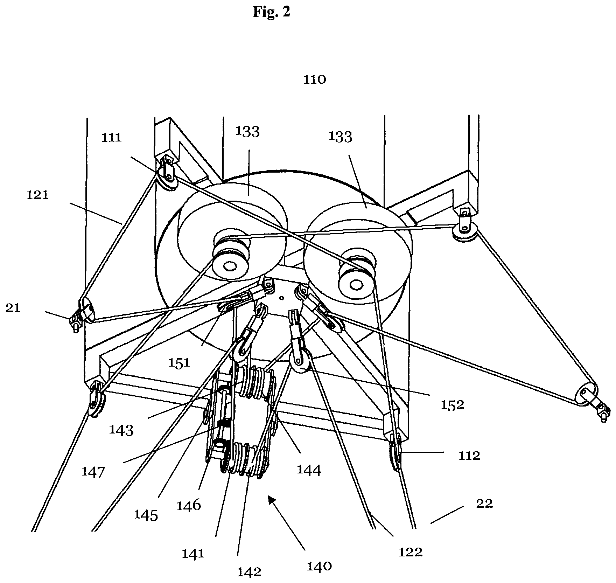

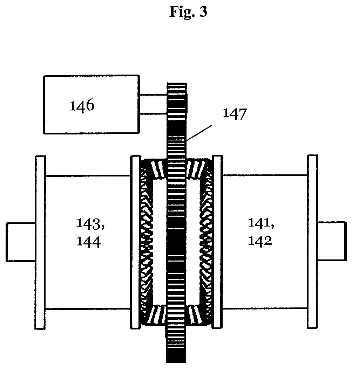

For the purpose of the invention, differential is defined as a mechanism that has two side gears for coiling two anchor lines, wherein the length of the anchor lines can change with respect to one another and whereby the total combined length of the anchor lines can be set, and whereby the side gears cooperate in such a manner that L1 + L2 = R wherein L1 is the length of the first anchor line, L2 is the length of the second anchor line and R is the length that is set by operating the crown gear. This means that when L1 becomes larger, L2 becomes proportionally smaller and vice versa. When the crown gear is operated, the combined length can be adapted to position the main body in the vertical direction. The operation of the differential will only be used over a limited length, and should therefore not be continuous. In the embodiment of Figure 2 a differential is shown wherein the differential only operates as a differential in a limited zone of operation, while in the embodiment of Figure 3 a continuous operation as a differential is obtained.

Based on the definition of the differential above, it will be clear that the differential can also be hydraulically or electrically emulated, wherein the crown gear is not presented as a physical gear, but in the form of a hydraulical or electrical connection of side gears. Therein, the hydraulical or electrical connection will define the relative rotation of the side gears with respect to each other, such that a technically similar and equivalent operation is obtained than a physical differential with crown wheel. Such hydraulical or electrical connection can also be provided to adapt the length of the anchor lines, in the same manner at that rotation of the crown gear changes the length of the anchor lines.

While Figure 1 shows the operational principles of the wave energy converter in a simple manner, Figure 2 shows a perspective bottom view of a possible embodiment of a wave energy converter. Figure shows how at the lower side of the main body 110 of the apparatus for converting energy from waves in a body of water multiple parts and elements are provided in duplicate. Substantially all elements are provided in duplicate, with the exception of the differential, so that movement in two directions (that are substantially perpendicular to each other) can be converted into energy.

Rotation means 133 are connected to the main body 110, and the anchor lines are connected with the rotation means such that movement of the anchor lines with respect to the main body 110 will result in a rotation of the rotation means. The rotations means 133 are connected with conversion means (not shown), for example a generator, for converting the energy of movement in another form of energy (in the case of the generator to electrical energy). Figure shows further two horizontally separated locations at the main body 111, 112, where anchor lines are guided, and between which the rotation means 133 are mounted.

Figure 2 further shows coiling means 140, which are provided for coiling anchor lines to adapt the length of the anchor lines. By setting the length of the anchor lines, the vertical position of the main body 110 is set. As is described in this description, the wave energy that acts on the main body 110 can be adapted by adapting the vertical position of the main body 110 (by placing the main body higher, more wave energy will act on the body, by placing the main body lower, less wave energy will act on the body). In this manner, the wave energy converter can be set to produce energy at its nominal yield.

Each anchor line extends between the main body and two points at the bottom to connect the main body with the bottom. In total, at least two anchor lines are provided, and the main body will be connected to the bottom at four points. With reference to Figure 2, the positioning of the first anchor line in the wave energy converter will be described. Positioning of the second anchor line is analog to the positioning of the first anchor line, and will be clear for the skilled person that considers the description regarding the first anchor line.

The first anchor line has two segments 21, 22. The first segment 121 of the anchor line extends from the coiling means 140, more particularly from the first segment 141, at a first side gear of the differential (of which the operation will be described further hereunder), to a first pulley 151 (that in this embodiment forms part of the differential), and further to a first point 21 at the bottom of the body of water, and further to a first of the two horizontally distinct locations at the main body 111, to end at the rotation means 133. Second segment of the first anchor line extends from these rotation means 133 to the second of the two horizontally distinct locations at the main body 112, further to the second point at the bottom of the body of water 22, to the second pulley 152 (which also forms part of the differential), to end at the coiling means 140, more particular on the second segment 142 of the first side gear of the differential. In this manner two segments of the first anchor line are coiled together at the location of a first end onto the first side wheel of the differential 140, and are coiled together at another end via the rotation means. At the location of the rotation means, the segments are coiled in an opposite direction, meaning that rotating of the rotation means will make the first segment coil while the other segment uncoils. As a result rotating of the rotation means will have as an effect that the total length of the anchor lines (segment 1 + segment 2) remains equal. This connection is therefore considered equivalent to a continuous anchor line in one piece that is connected to rotation means.

At the location of another end of the segment of the first anchor line, the segments are coiled at a side gear of the differential forming the coiling means 140. Thereby, the anchor lines are coiled in the same direction, meaning that rotation of the side gear will have the same effect for both segments. Upon rotating of the side gear both segments will be coiled, or both segments will be uncoiled. As a result, the total length of the first anchor line (which is the sum of segment 1 + segment 2) can be adapted by rotating the first side gear 141, 142.

The coiling means 140 operate as a differential. Thereby, in the embodiment as shown in Figure 2, the first side gear is formed by two segments 141 and 142, where respectively the two segments of the first anchor line are coiled. The second side gear is formed by segments 143, 144, where two segments of the second anchor line are respectively coiled. As a result the first anchor line coils at the first side gear and the second anchor line coils at the second side gear. Rotation of the side gears is directed by the crown gear, which makes the side gears roll in such a direction that the two anchor lines will both coil, or both uncoil. The function of the crown gear in Figure 2 is formed by motor 146 and rotation rod 147, which rotation rod 147 drives the side gears. In Figure 2, the side gears are seemingly driven in the opposite direction, however the anchor lines are also coiled in the opposite direction on the two side wheels, such that opposite driving on the side wheels will result in an equal coiling or uncoiling of the first and second anchor lines. The operation of the differential can be described as a "give-and-take" between two anchor lines, and is in the embodiment of Figure 2 obtained by rotation of the coiling means with respect to axis 145. In the embodiment of Figure 2 the side wheels of the coiling means are provided with a shaft, which shafts are located at a distance with respect to each other and are interconnected via a frame that is rotatable with respect to a central shaft 145. By tilting the coiling mechanism around the central shaft 145, the first side gear 141, 142 will be brought closer to the centrally located pulleys 151, 152, while the second side gear will move away from these pulleys. As a result, the operational length (measured from the pulleys) of the first anchor line enlarges, while the operational length (from the pulleys) of the second anchor line is made smaller. The result is that the anchor lines will remain under tension in all positions of the main body, such that a correct operation of the rotating means (for generating energy) is assured. Furthermore, wear as a result of bringing under tension and relaxation of anchor lines is avoided since the tension is made continuous by the operation of the differential.

Figure 3 shows an alternative form of coiling means according to the invention and shows a differential with a first side gear 141, 142 and a second side gear 143, 144, which are driven by a crown gear 147. A motor 146 is provided to drive the crown gear. The differential as shown in Figure 3 operates in an analog manner as differentials that are used in vehicles to allow a relative rotation between two wheels.

To obtain a good operation of the coiling system according to the embodiment of Figure 2, the coiling system is connected at a peripheral zone of the main body, while the anchor lines that start at the coiling system roll over pulleys that are located in a central zone of the main body. This will result in a balanced operation of the coiling system.

When flat ropes are used (sketch flat rope), the ropes are coiled concentrically as a result of which the diameter of the one roll will differ from the diameter of another roll when the length of both sets are not equal. Since the diameter of both rolls is not the same and the moment of torque that is exerted by the rolls is the same, the tension in both sets of ropes will not be equal. Thereby, the set of ropes that is in the most uncoiled condition will feel a larger tension than other sets of ropes, the set of ropes that feels the least tension (the largest diameter of the roll), can be found in the plane of the flow direction (the direction of the movement). Because the tension at the set of ropes that is positioned orthogonal to this plane is larger than the set in the direction of movement, this difference in tension will counteract on the movement and in this manner decrease the drift angle (distance that drives the structure out of the center as a result of the flow).

Two separate drums are provided at the rotation means with which the ropes drive the generator. When the generator rotates, one side of the rope will be coiled and the other side will be uncoiled, since the rope is coiled at one of the drums in clockwise direction and in counterclockwise direction on the other drum. The two separate drums and also the two separate ropes have as an advantage that the coiled rope cannot contact the uncoiled rope so that friction between these can be avoided. A further advantage is that if one rope breaks, amending the height (security) remains operational. With the coiling system with the leverage operation, adapting the height remains operational as long as one rope remains intact.

When working with flat ropes, two drums are used and two ropes are connected to one generator. This has as an advantage that when a large horizontal movement is made, one drum will be further uncoiled than the other will be coiled (due to the difference in diameter), and in such case the tension on the ropes as a result of the buoyant force in both ropes of a single generator is equal, but the diameter of the drums (plus windings) is not equal. As a result, a torque is exerted on the generator that counteracts on the floating of the structure out of the center (so that the drift angle is limited).

Although the invention has been described hereinabove with reference to particular exemplary embodiments, these embodiments should be considered to illustrate the invention, and not to limit it. The skilled person will understand that other variations and embodiments will also fall within the scope of the attached claims. Particularly features described in relation to one or multiple specific embodiments, can be added with a similar effect to other embodiments of the invention.

The main body 110 is formed of materials that are suitable for floating in water, particularly sea water. In an example, the main body 110 is made entirely from a plastic foam-like material, or from a closed air-holding vessel.

One or more anchor lines 121-124 can be connected to an anchor block via a pulley. These anchor lines 121-124 originate from the coiling mechanism towards an anchor block and back to the main body 110 over the roll with the generator towards an opposite anchor block via a pulley back to the coiling mechanism.

When the energy of the waves is too high (for example in stormy weather), the floating height is preferably lowered until the position is reached wherein the wave energy convertor 100 operates around its nominal yield.

The connection of anchor lines 121-124 with the bottom 20 is formed in a conventional manner. Pins, poles and other foundation structures can be placed in the bottom substrate, or anchors that remain on the bottom due to their weight can be used. Anchor lines 121-124 can be also connected to a single anchoring structure, for example a concrete bottom plate.

## Claims

1. Apparatus (100) for converting energy from waves in a body of water (10), the apparatus comprising:
- a main body (110), adapted to float onto the water;
- a first anchor line connected to the main body at two horizontally distinct locations, and adapted to be anchored to the bottom (20) of the body of water (10) at two points, which two points are located at a distance from one another in a first direction; and
- a second anchor line connected to the main body at two horizontally distinct locations, and adapted to be anchored to the bottom (20) of the body of water (10) at two further points (21-24), which two further points are located at a distance from one another in a second direction that is substantially perpendicular to the said first direction; and
- rotation means connected to the main body and to the first and second anchor line, such that a horizontal first movement of the main body with respect to the two points and/or the two further points results in a second movement of the rotation means,
- conversion means adapted to convert the second movement in another form of energy, and
- coiling means for controlling the vertical position of the main body by adapting the length of the first and second anchor line,
**characterized in that** the coiling means are formed as a differential wherein the first anchor line is coiled at a first side gear and the second anchor line is coiled at a second side gear of the differential, and wherein a crown gear of the differential is operated to adapt the vertical position.

2. Apparatus (100) according to claim 1, wherein each of the first and second anchor lines comprise two segments that at the location of the coiling means are cooperatively coupled so as to operate as a single anchor line.

3. Apparatus (100) according to claim 1 or 2, wherein the conversion means comprise a generator.

4. Apparatus (100) according to claim 1, wherein at the location of the two points and the two further points, pulleys are provided, wherein the anchor lines roll over the pulleys at the location of the two points and the two further points.

5. Apparatus (100) according to one of the previous claims, wherein the anchor lines are connected with the main body via pulleys.

6. Apparatus (100) according to any one of the previous claims, wherein rotation means comprise a first roll (133) driven by the first anchor line (121), and wherein the conversion means comprise a first generator connected to the first roll (133).

7. Apparatus (100) according to claim 6, wherein rotation means comprise a second roll driven by the second anchor line, and wherein the conversion means comprise a second generator connected to the second roll.

8. Apparatus (100) according to claim 6 or 7 and according to claim 2, wherein each roll from the rotation means comprises two parts for the two segments of the respective anchor lines.

9. Apparatus (100) according to claim 2, wherein each segment of the first and second anchor line extends from a respective side gear of the differential over a respective one of the two points and two further points at the bottom, and further over a respective location at the main body up to the rotation means.

10. Apparatus (100) according to one of the previous claims, wherein the main body (110) is mainly formed as a straight prism with a cross-formed base.

11. Apparatus (100) according to one of the previous claims, wherein the first and second anchor lines are formed as flat ropes.

12. Use of an apparatus (100) according to any one of the previous claims, being anchored at two points (21, 22) and two further points at the bottom (20) of a body of water (10), for generating electricity.

## Patentansprüche

1. Vorrichtung (100) zum Umwandeln von Energie von Wellen in einem Gewässer (10), wobei die Vorrichtung aufweist:
- einen Hauptkörper (110), der angepasst ist, um auf dem Wasser zu schwimmen,
- eine erste Ankerleine, die an zwei horizontal unterschiedlichen Stellen mit dem Hauptkörper verbunden ist und angepasst ist, um an zwei Punkten am Boden (20) des Gewässers (10) verankert zu sein, welche zwei Punkte in einem Abstand voneinander in einer ersten Richtung angeordnet sind, und
- eine zweite Ankerleine, die an zwei horizontal unterschiedlichen Stellen mit dem Hauptkörper verbunden ist und angepasst ist, um an zwei weiteren Punkten (21 bis 24) am Boden (20) des Gewässers (10) verankert zu sein, welche zwei weiteren Punkte in einem Abstand voneinander in einer zweiten Richtung angeordnet sind, die im Wesentlichen senkrecht zu der ersten Richtung ist, und
- Rotationsmittel, die mit dem Hauptkörper und mit der ersten und der zweiten Ankerleine verbunden sind, so dass eine horizontale erste Bewegung des Hauptkörpers relativ zu den zwei Punkten und / oder den zwei weiteren Punkten zu einer zweiten Bewegung der Rotationsmittel führt,
- Umwandlungsmittel, die angepasst sind, um die zweite Bewegung in eine andere Form von Energie umzuwandeln, und
- Aufrollmittel zum Steuern der vertikalen Position des Hauptkörpers durch Anpassen der Länge der ersten und der zweiten Ankerleine,
**dadurch gekennzeichnet, dass** die Aufrollmittel als ein Differential ausgebildet sind, wobei die erste Ankerleine an einem ersten Achswellenrad aufgerollt ist und die zweite Ankerleine an einem zweiten Achswellenrad des Differentials aufgerollt ist, und wobei ein Zahnkranz des Differentials betätigt wird, um die vertikale Position anzupassen.

2. Vorrichtung (100) gemäß Anspruch 1, wobei jede von der ersten und der zweiten Ankerleine zwei Segmente aufweist, die an der Position der Aufrollmittel zusammenwirkend verbunden sind, um als eine einzige Ankerleine zu wirken.

3. Vorrichtung (100) gemäß Anspruch 1 oder 2, wobei die Umwandlungsmittel einen Generator aufweisen.

4. Vorrichtung (100) gemäß Anspruch 1, wobei an der Position der zwei Punkte und der zwei weiteren Punkte Rollen vorgesehen sind, wobei die Ankerleinen an der Position der zwei Punkte und der zwei weiteren Punkte über die Rollen rollen.

5. Vorrichtung (100) gemäß einem der vorhergehenden Ansprüche, wobei die Ankerleinen über Rollen mit dem Hauptkörper verbunden sind.

6. Vorrichtung (100) gemäß irgendeinem der vorhergehenden Ansprüche, wobei Rotationsmittel eine erste Rolle (133) aufweisen, die durch die erste Ankerleine (121) angetrieben ist, und wobei die Umwandlungsmittel einen ersten Generator aufweisen, der mit der ersten Rolle (133) verbunden ist.

7. Vorrichtung (100) gemäß Anspruch 6, wobei Rotationsmittel eine zweite Rolle aufweisen, die durch die zweite Ankerleine angetrieben ist, und wobei die Umwandlungsmittel einen zweiten Generator aufweisen, der mit der zweiten Rolle verbunden ist.

8. Vorrichtung (100) gemäß Anspruch 6 oder 7 und gemäß Anspruch 2, wobei jede Rolle von den Rotationsmitteln zwei Teile für die zwei Segmente der jeweiligen Ankerleinen aufweist.

9. Vorrichtung (100) gemäß Anspruch 2, wobei jedes Segment der ersten und der zweiten Ankerleine sich von einem jeweiligen Achswellenrad des Differentials über einen jeweiligen der zwei Punkte und zwei weiteren Punkte am Boden und weiter über eine jeweilige Position am Hauptkörper bis zu den Rotationsmitteln erstreckt.

10. Vorrichtung (100) gemäß einem der vorhergehenden Ansprüche, wobei der Hauptkörper (110) hauptsächlich als ein gerades Prisma mit einer kreuzförmigen Grundfläche geformt ist.

11. Vorrichtung (100) gemäß einem der vorhergehenden Ansprüche, wobei die erste und die zweite Ankerleine als flache Seile ausgebildet sind.

12. Verwendung einer Vorrichtung (100) gemäß irgendeinem der vorhergehenden Ansprüche, die an zwei Punkten (21, 22) und zwei weiteren Punkten am Boden (20) eines Gewässers (10) verankert ist, zum Erzeugen von Elektrizität.

## Revendications

1. Dispositif (100) destiné à convertir l'énergie des vagues dans un plan d'eau (10), le dispositif comprenant :
un corps principal (110), adapté afin de flotter sur l'eau ;
une première ligne d'ancrage reliée au corps principal à deux emplacements distincts horizontalement, et adaptée de manière à être ancrée au fond (20) du plan d'eau (10) en deux points, lesquels deux points sont situés à une certaine distance l'un de l'autre suivant une première direction ; et
une seconde ligne d'ancrage reliée au corps principal à deux emplacements horizontalement distincts et adaptée de manière à être ancrée au fond (20) du plan d'eau (10) en deux points supplémentaires (21-24), lesquels deux points supplémentaires sont situés à une certaine distance l'un de l'autre suivant une deuxième direction qui est sensiblement perpendiculaire à ladite première direction ; et
des moyens de rotation reliés au corps principal et aux première et seconde lignes d'ancrage, de telle sorte qu'un premier mouvement horizontal du corps principal par rapport aux deux points et/ou aux deux points supplémentaires conduit à un second mouvement des moyens de rotation,
des moyens de conversion adaptés afin de convertir le second mouvement en une autre forme d'énergie, et
des moyens d'enroulement destinés à commander la position verticale du corps principal en adaptant la longueur des première et seconde lignes d'ancrage,
**caractérisé en ce que** les moyens d'enroulement sont formés en un boîtier différentiel dans lequel la première ligne d'ancrage est enroulée au niveau d'un premier engrenage latéral et la seconde ligne d'ancrage est enroulée au niveau d'un second engrenage latéral du boîtier différentiel, et dans lequel une couronne d'engrenage du boîtier différentiel est commandée afin de s'adapter à la position verticale.

2. Dispositif (100) selon la revendication 1, dans lequel chacune des première et seconde lignes d'ancrage comprend deux segments qui à l'emplacement des moyens d'enroulement sont couplés de manière à coopérer afin d'agir comme une seule ligne d'ancrage.

3. Dispositif (100) selon la revendication 1 ou 2, dans lequel les moyens de conversion comportent un générateur.

4. Dispositif (100) selon la revendication 1, dans lequel, à l'emplacement des deux points et des deux points supplémentaires, des poulies sont agencées, dans lequel les lignes d'ancrage s'enroulent autour des poulies à l'emplacement des deux points et des deux points supplémentaires.

5. Dispositif (100) selon l'une des revendications précédentes, dans lequel les lignes d'ancrage sont reliées au corps principal par l'intermédiaire des poulies.

6. Dispositif (100) selon l'une quelconque des revendications précédentes, dans lequel les moyens de rotation comprennent un premier rouleau (133) entraîné par la première ligne d'ancrage (121), et dans lequel les moyens de conversion comprennent un premier générateur relié au premier rouleau (133).

7. Dispositif (100) selon la revendication 6, dans lequel les moyens de rotation comprennent un second rouleau entraîné par la seconde ligne d'ancrage, et dans lequel les moyens de conversion comprennent un second générateur relié au second rouleau.

8. Dispositif (100) selon la revendication 6 ou 7 et selon la revendication 2, dans lequel chaque rouleau des moyens de rotation comprend deux parties pour deux segments des lignes d'ancrage respectives.

9. Dispositif (100) selon la revendication 2, dans lequel chaque segment des première et seconde lignes d'ancrage s'étend à partir d'un engrenage latéral respectif du boîtier différentiel sur l'un respectif des deux points et deux points supplémentaires au niveau du fond et, en outre, sur un emplacement respectif au niveau du corps principal jusqu'aux moyens de rotation.

10. Dispositif (100) selon l'une des revendications précédentes, dans lequel le corps principal (110) est formé principalement comme un prisme rectiligne avec une base en forme de croix.

11. Dispositif (100) selon l'une quelconque des revendications précédentes, dans lequel les première et seconde lignes d'ancrage sont réalisées sous la forme de cordes plates.

12. Utilisation d'un dispositif (100) selon l'une quelconque des revendications précédentes, qui est ancré au niveau de deux points (21, 22) et de deux points supplémentaires au fond (20) d'un plan d'eau (10), afin de produire de l'électricité.
